# EUROPÄISCHE PATENTANMELDUNG

(11) **EP 2 161 169 A2**
(43) Veröffentlichungstag der Anmeldung: **10.03.2010**
(21) Anmeldenummer: 09167066.1
(22) Anmeldetag: 03.08.2009
(51) Int. Cl.: B60S 1/24, F16C 11/06

(54) **Gelenkverbindungsanordnung in einer Scheibenwischvorrichtung**

(30) Priorität: 05.09.2008 DE 102008041829
(71) Anmelder: Robert Bosch GmbH, 70442 Stuttgart (DE)
(72) Erfinder: Benner, Andreas, 77830, Buehlertal (DE); Weiler, Michael, 77833, Ottersweier (DE); Boos, Tino, 76532, Baden-Baden (DE); Kim, Dong Hyun, 363-942, Chongwon-Gu (KR)

(57) **Zusammenfassung**

Eine Gelenkverbindungsanordnung in einer Scheibenwischvorrichtung für ein Fahrzeug weist einen an einem Übertragungsglied (3,10) angeordneten Kugelzapfen (11) und eine den Kugelzapfen (11) zumindest teilweise übergreifende Kugelschale (12) auf, die mit einer gewölbten Auflagefläche (18) versehen ist, an der eine Dichtkappe (16) eines ringförmigen Dichtelementes (15) gleitend aufliegt.

## Beschreibung

Die Erfindung bezieht sich auf eine Gelenkverbindungsanordnung in einer Scheibenwischvorrichtung in einem Fahrzeug nach dem Oberbegriff des Anspruches 1.

### Stand der Technik

In der DE 10 2004 005 065 A1 wird eine Scheibenwischvorrichtung für ein Kraftfahrzeug beschrieben, die einen elektrischen Antriebsmotor aufweist, welcher über ein Wischergestänge Wischarme in eine pendelnde Drehbewegung versetzt, an denen auf der Fahrzeugscheibe aufliegende Wischblätter befestigt sind. Das Wischergestänge wird von einer Motorkurbel betätigt, die unmittelbar von der Ankerwelle des Antriebsmotors angetrieben wird. Die Motorkurbel ist über eine Gelenkverbindungsanordnung mit dem Wischergestänge verbunden, wobei die Gelenkverbindungsanordnung einen Kugelzapfen an der Motorkurbel umfasst, der zumindest teilweise von einer Kugelschale übergriffen ist, wobei zum Schutz des Kugelzapfens üblicherweise ein übergreifendes Dichtelement vorgesehen ist, das einen Zwischenraum zwischen zwei benachbarten Kugelschalen überbrückt. Das Dichtelement ist in der Regel fest mit den Kugelschalen verbunden.

Bei derartigen Gelenkverbindungsanordnungen ist zu berücksichtigen, dass aufgrund der Relativbewegung zwischen der Kugelschale und dem Kugelzapfen auch die Dichtkappe eine Bewegung ausführt, bei der das Dichtmaterial der Dichtkappe Stauchungen und Dehnungen unterworfen ist, was über längere Betriebszeiträume zu einem Verschleiß des Dichtelementes führen kann.

### Offenbarung der Erfindung

Der Erfindung liegt die Aufgabe zugrunde, eine Gelenkverbindungsanordnung in einer Scheibenwischvorrichtung mit einfachen konstruktiven Maßnahmen dauerhaft vor Verunreinigungen wie Wasser und Staub zu schützen.

Diese Aufgabe wird erfindungsgemäß mit den Merkmalen des Anspruches 1 gelöst. Die Unteransprüche geben zweckmäßige Weiterbildungen an.

Die erfindungsgemäße Gelenkverbindungsanordnung in einer Scheibenwischvorrichtung in einem Kraftfahrzeug umfasst einen Kugelzapfen an einem Übertragungsglied zur Bewegungsübertragung, eine den Kugelzapfen zumindest teilweise übergreifende Kugelschale und ein an der Kugelschale anliegendes ringförmiges Dichtelement. Die Kugelschale weist eine gewölbte Auflagefläche auf, an der eine Dichtkappe des Dichtelementes aufliegt, und zwar in der Weise, dass bei einer Relativdrehbewegung zwischen Kugelschale und Dichtelement die Dichtkappe auf der Auflagefläche der Kugelschale entlanggleitet.

Diese Ausführung hat den Vorteil eines einfachen Aufbaus, da das als separates Bauteil ausgeführte Dichtelement lediglich auf den Kugelzapfen aufgesteckt werden muss und keine Verbindungsmaßnahmen zur Kugelschale erforderlich sind. Dementsprechend kann sowohl die Kugelschale als auch das Dichtelement bzw. die Dichtkappe des Dichtelementes konstruktiv verhältnismäßig einfach aufgebaut sein.

Ein weiterer Vorteil ist darin zu sehen, dass das Dichtelement geringeren mechanischen Beanspruchungen unterworfen ist. Das Dichtelement liegt lediglich gleitend auf der gewölbten Auflagefläche der Kugelschale auf, es besteht aber keine feste Verbindung zwischen dem Dichtelement und der Kugelschale, so dass Relativbewegungen der Kugelschale bezogen auf den Kugelzapfen nicht oder nur in verminderter Weise von dem Dichtelement ausgeführt werden. Das Dichtelement ist geringeren Stauchungen und Dehnungen unterworfen, wodurch die Lebensdauer und die Funktionstüchtigkeit des Dichtelementes verlängert bzw. verbessert ist. Trotz der geringeren mechanischen Beanspruchung ist die innen liegende Seite der Kugelschale vor Wasser und Staub und sonstigen Verunreinigungen wirksam geschützt, da die Dichtkappe des Dichtelementes auf Kontakt zur Auflagefläche der Kugelschale liegt. Durch eine Vorspannung des Dichtelementes kann eine hinreichend gute Dichtigkeit im Kontaktbereich zwischen Dichtkappe und Auflagefläche der Kugelschale gewährleistet werden.

Ein weiterer Vorteil liegt darin, dass die Bewegungsübertragung im Gelenk nicht eingeschränkt ist. Es muss lediglich die verhältnismäßig geringe Reibung zwischen der Dichtkappe und der Auflagefläche der Kugelschale überwunden werden, die maßgeblich über die Vorspannung des Dichtelementes und über die Oberflächenbeschaffenheit der Kugelschale und des Dichtelements bestimmt wird. Dagegen wird die Bewegung der Kugelschale und damit letztlich die Übertragung der Bewegung vom Übertragungsglied zu einer an der Kugelschale befestigten Gelenkstange nicht wie im Stand der Technik durch die feste Verbindung der Dichtkappe mit der Kugelschale beeinträchtigt.

Gemäß bevorzugter Ausführung weist das Dichtelement zusätzlich zu der Dichtkappe einen Dichtsteg auf, der mit der Dichtkappe verbunden ist und in Kontakt mit dem Kugelzapfen steht. Über den Dichtsteg ist eine Abstützung des gesamten Dichtelementes am Kugelzapfen gegeben, so dass das Dichtelement zumindest annähernd ortsfest am Kugelzapfen angeordnet ist. Die Kugelschale bewegt sich hierbei mit ihrer Auflagefläche unter der aufliegenden Dichtkappe hindurch.

Die Kombination von Dichtsteg und Dichtkappe bietet darüber hinaus den Vorteil, dass jeder dieser Abschnitte des Dichtelementes in bestmöglicher Weise an seine spezifische Funktion angepasst werden kann. So erstreckt sich der Dichtsteg zumindest im Wesentlichen quer zur Achse des Kugelzapfens, wohingegen die Dichtkappe im Wesentlichen in einer hierzu senkrechten Ebene liegen kann, die parallel zur Zapfenachse angeordnet ist. Der Dichtsteg bildet aufgrund der rotationssymmetrischen Ausbildung des Dichtelementes eine Scheibe und überbrückt radial die Distanz zwischen der äußeren Mantelfläche des Kugelzapfens und der Auflagefläche auf der Kugelschale, die von der Dichtkappe kontaktiert wird.

Es kann zweckmäßig sein, den Dichtsteg an seiner radial innen liegenden Seite an die Außenkontur des Kugelzapfens anzupassen, beispielsweise dadurch, dass der Dichtsteg zumindest an seiner radial innen liegenden Stirnseite einen abgerundeten Querschnitt aufweist. Dieser abgerundete Querschnitt schmiegt sich an eine abgerundete Einkerbung im Kugelzapfen an, wodurch eine stabile Position und Halterung des Dichtelementes am Kugelzapfen unterstützt wird.

In einer alternativen Ausführung weist der Dichtsteg eine rechteckige Querschnittsform auf, was den Vorteil einer konstruktiv einfachen Ausführung hat, die entsprechend einfach hergestellt werden kann.

Dichtsteg und Dichtkappe können in der Weise zueinander angeordnet sein, dass ein T-Profil gebildet ist. Diese Ausführung kommt insbesondere in Betracht, wenn das Dichtelement zwischen zwei axial beabstandeten Kugelschalen am Kugelzapfen angeordnet ist. Dagegen kann es zweckmäßig sein, Dichtsteg und Dichtkappe in L-Form anzuordnen, wenn das Dichtelement zwischen einer Kugelschale und dem Übertragungsglied angeordnet ist.

Es kann vorteilhaft sein, den Dichtsteg über einen Abschnitt mit verjüngtem Querschnitt mit der Dichtkappe zu verbinden. Dadurch werden die Bewegungen des Dichtstegs und der Dichtkappe weitgehend voneinander entkoppelt, wodurch der Steg sich in bestmöglicher Weise an die Außenkontur des Kugelzapfens ohne Beeinträchtigung der Position der Dichtkappe anschmiegen kann. Umgekehrt führt eine Relativbewegung der Dichtkappe, beispielsweise ausgelöst durch eine Bewegung der Kugelschale, nicht zu einer veränderten Position des Dichtstegs.

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Ansicht einer Scheibenwischvorrichtung, die in einem Kraftfahrzeug für die Scheibenreinigung eingesetzt wird und einen elektrischen Antriebsmotor und ein Wischergestänge zur Bewegungsübertragung auf einen Wischarm aufweist, wobei das Wischergestänge mehrere Gelenkverbindungsanordnungen zwischen beweglichen Teilen des Wischergestänges umfasst,
- Fig. 2: einen Schnitt durch eine Gelenkverbindungsanordnung in einer ersten Ausführung, mit einer auf einen Kugelzapfen aufgesetzten Kugelschale, an die eine Gelenkstange angeschlossen ist, wobei die Außenseite der Kugelschale eine gewölbte Auflagefläche aufweist, an der eine Dichtkappe eines ringförmigen Dichtelementes aufliegt,
- Fig. 3: eine weitere Gelenkverbindungsanordnung mit insgesamt zwei Kugelschalen auf einem Kugelzapfen und zwei Dichtelementen zwischen den Kugelschalen bzw. einer der Kugelschalen und einem Übertragungsglied,
- Fig. 4: die Gelenkverbindungsanordnung nach Fig. 3 in verschwenkter Position der Kugelschalen,

- Fig. 5: eine vergrößerte Darstellung eines Teils des Dichtelementes, bestehend aus einer Dichtkappe und einem Dichtsteg mit abgerundetem Querschnitt, wobei die Dichtkappe an gewölbten Auflageflächen von zwei verschiedenen Kugelschalen aufliegt,
- Fig. 6: eine Fig. 5 entsprechende Darstellung, jedoch mit einem unter Vorspannung gesetzten und geringfügig verformten Dichtelement,
- Fig. 7: eine weitere Ausführung eines Dichtelementes mit trapezförmiger Dichtkappe und abgerundetem Dichtsteg, der über einen verjüngten Abschnitt mit der Dichtkappe verbunden ist,
- Fig. 8: eine weitere Ausführung, bei der in den Dichtsteg eine Ausnehmung für den Übertritt von Schmiermittel eingebracht ist,
- Fig. 9: eine weitere Ausführung mit im Querschnitt rechteckförmiger Dichtkappe und rechteckförmigem Dichtsteg,
- Fig. 10: eine ähnliche Ausführung wie Fig. 9, jedoch mit zusätzlichen Dichtlippen an der Dichtkappe, die an der Auflagefläche der Kugelschalen aufliegen,
- Fig. 11: eine ähnliche Ausführung wie Fig. 10, jedoch mit jeweils zwei Dichtlippen pro Auflagefläche,
- Fig. 12: eine Ausführung mit einem Dichtelement, bei dem auf einen Dichtsteg verzichtet wird und das lediglich aus einer Dichtkappe besteht,
- Fig. 13: das Dichtelement aus Fig. 12 im verformten Zustand,

- Fig. 14: ein weiteres Ausführungsbeispiel für ein Dichtelement, das nur aus einer Dichtkappe besteht, die teilkreisförmig gebogen ist,
- Fig. 15: das Dichtelement aus Fig. 14 im verformten Zustand.

In den Figuren sind gleiche Bauteile mit gleichen Bezugszeichen versehen.

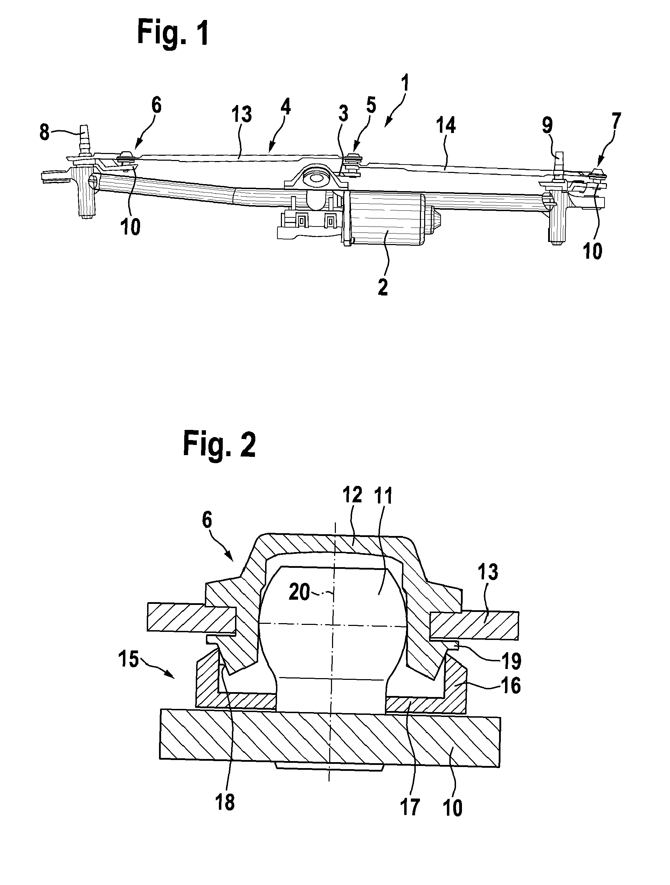

In Fig. 1 ist eine Scheibenwischvorrichtung 1 für ein Kraftfahrzeug dargestellt, die einen elektrischen Antriebsmotor 2 umfasst, welcher über eine Motorkurbel 3 ein Wischergestänge 4 antreibt. Zwischen der Motorkurbel 3 und dem Wischergestänge 4 befindet sich zur Bewegungsübertragung eine Gelenkverbindungsanordnung 5, weitere Gelenkverbindungsanordnungen 6 und 7 befinden sich im seitlichen Bereich des Wischergestänges 4. Das Wischergestänge 4 versetzt Wischerwellen 8 und 9 in eine pendelnde Drehbewegung, an denen die Wischarme der Scheibenwischvorrichtung befestigt werden.

Die mittlere Gelenkverbindungsanordnung 5 verbindet die Motorkurbel 3 mit zwei seitlich ausragenden Gelenkstangen 13 und 14, die Teil des Wischergestänges 4 sind und die Bewegung zu den außen liegenden Gelenkverbindungsanordnungen 6 und 7 übertragen, die über jeweils eine Schwinge 10 die Wischerwellen 8 bzw. 9 antreiben.

In Fig. 2 ist beispielhaft die außen liegende Gelenkverbindungsanordnung 6 im Detail dargestellt, wobei die gegenüberliegende, ebenfalls außen liegende Gelenkverbindungsanordnung 7 in entsprechender Weise aufgebaut ist. Die Gelenkverbindungsanordnung 6 umfasst einen Kugelzapfen 11, der fest mit der Schwinge 10 verbunden ist und von einer Kugelschale 12 übergriffen ist, an der die Gelenkstange 13 fest angreift und die auf dem Kugelzapfen 11 eine Drehbewegung ausführen kann. Zwischen der den Kugelzapfen 11 tragenden Oberseite der Schwinge 10 und der Unterseite der Kugelschale 12 ist ein ringförmiges, rotationssymmetrisches Dichtelement 15 angeordnet, über das der axiale Abstand zwischen der Unterkante der Kugelschale 12 und der Oberseite der Schwinge 10 überbrückt und abgedichtet wird, um den innen liegenden Bereich der Gelenkverbindungsanordnung vor Nässe und Verschmutzungen zu schützen.

Das Dichtelement 15 weist ein im Querschnitt L-förmiges Profil auf und besteht aus einer radial außen liegenden Dichtkappe 16 und einem Dichtsteg 17, wobei Dichtkappe 16 und Dichtsteg 17 ein gemeinsames, einteiliges Bauteil bilden. Der Dichtsteg 17 liegt in einer Ebene, die senkrecht zur Lagerachse 20 verläuft. Die Dichtkappe 16 liegt dagegen in einer Ebene, die parallel zur Lagerachse 20 liegt. Der Dichtsteg 17 befindet sich unmittelbar benachbart und parallel zur Oberseite der Schwinge 10. Die Dichtkappe 16 und der Dichtsteg 17 besitzen jeweils einen rechteckförmigen Querschnitt.

Die freie Stirnseite der Dichtkappe 16 liegt gleitend an einer gewölbten, außen liegenden Auflagefläche 18 der Kugelschale 12 an. Die freie Stirnseite der Dichtkappe 16 weist eine zugespitzte Fase auf, die berührend und gleitend an der Auflagefläche 18 anliegt, so dass bei einer Relativbewegung der Kugelschale 12 gegenüber dem Kugelzapfen 11 die Dichtkante an der Dichtkappe 16 ohne Einschränkung der Bewegung der Kugelschale auf der Auflagefläche 18 entlanggleiten kann. Das Dichtelement mit der Dichtkappe 16 und dem Dichtsteg 17 behält hierbei seine Position bezogen auf die Schwinge 10 bzw. den Kugelzapfen 11 bei.

Die gewölbte Auflagefläche 18 ist auf der der Gelenkstange 13 zugewandten Seite von einem radial herausragenden Vorsprung 19 begrenzt, die Dichtkante an der Dichtkappe 16 liegt in der in Fig. 2 gezeigten, nicht-ausgelenkten Ausgangsposition im Übergang zwischen der Auflagefläche 18 und dem Vorsprung 19 an. Der Vorsprung 19 bildet eine Begrenzung für die Dichtkappe 16.

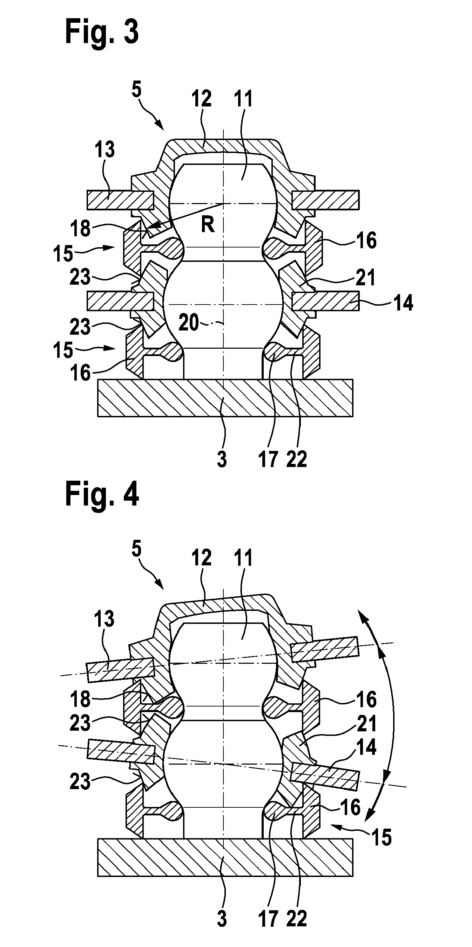

In den Fig. 3 und 4 ist die mittlere Gelenkverbindungsanordnung 5 dargestellt, wobei Fig. 3 den nicht-ausgelenkten Ausgangszustand und Fig. 4 den ausgelenkten Zustand zeigt. Über die Gelenkverbindungsanordnung 5 wird eine Verbindung zwischen der Motorkurbel 3 und zwei Gelenkstangen 13 und 14 hergestellt. Dementsprechend besitzt die Gelenkverbindungsanordnung 5 einen zweiteiligen Kugelzapfen 11, der zwei axial beabstandete Zapfenabschnitte aufweist, wobei auf dem axial außen liegenden Zapfenabschnitt die Kugelschale 12 und auf dem innen liegenden, der Motorkurbel 3 benachbarten Zapfenabschnitt eine weitere Kugelschale 21 aufliegt. Die Kugelschale 12 ist mit der Gelenkstange 13 und die Kugelschale 21 mit der Gelenkstange 14 gekoppelt.

Zwischen den beiden Kugelschalen 12 und 21 befindet sich ein erstes, ringförmiges und rotationssymmetrisch ausgebildetes Dichtelement 15 mit Dichtkappe 16 und Dichtsteg 17. Ein zweites, gleich aufgebautes Dichtelement 15 liegt zwischen der Oberseite der Motorkurbel 3, an der sich der Kugelzapfen 11 erhebt, und der Unterkante der zweiten Kugelschale 21. Die Dichtkappe 16 und der Dichtsteg 17 bilden eine T-Form.

Die Dichtkappe 16 weist einen trapezförmigen Querschnitt auf und besitzt auf ihrer den Auflageflächen 18 zugewandten Seite jeweils fasenartige Dichtkanten, mit denen die Dichtkappe auf den Auflageflächen 18 und 23 der Kugelschalen 12 bzw. 21 gleitend aufliegt. Das Dichtelement 15 ist bezogen auf eine Mittelebene senkrecht zur Lagerachse 20 symmetrisch aufgebaut.

Der Dichtsteg 17 besitzt auf seiner dem Kugelzapfen 11 zugewandten Stirnseite eine abgerundete Querschnittsform, die an die Außenkontur des Kugelzapfens 11 angepasst ist, dergestalt, dass der Dichtsteg 17 in eine radial verengte Einschnürung in der Mantelfläche des Kugelzapfens einragt und dort flächig anliegt. Der Dichtsteg 17 ist über einen verjüngten Querschnitt 22 mit der Dichtkappe 16 verbunden. Der verjüngte Querschnitt 22 bewirkt eine weitgehende Entkopplung der Bewegungen von Dichtkappe 16 und Dichtsteg 17.

Jede der Kugelschalen 12 und 21 besitzt auf ihrer Außenseite jeweils eine gewölbte, teilkugelförmige Auflagefläche 18 bzw. 23, an der die Dichtkappe 16 des Dichtelementes 15 entlanggleiten kann. Das zwischen den beiden Kugelschalen 12 und 21 angeordnete Dichtelement 15 berührt hierbei mit seinen beiden axial gegenüberliegenden Dichtkanten an der Dichtkappe 16 jeweils eine Auflagefläche 18 bzw. 23 verschiedener Kugelschalen 12 bzw. 21. Der Radius der Auflagefläche 18 an der Kugelschale 12 ist mit R bezeichnet. Auch die Auflagefläche 23 an der zweiten Kugelschale 21 besitzt vorzugsweise den gleichen Radius R wie die erste Kugelschale 12.

In Fig. 4 sind die Kugelschalen 12 und 21 in einer ausgelenkten Position dargestellt. Da die Dichtkappen 16 der beiden Dichtelemente 15 an den Auflageflächen 18 bzw. 23 entlanggleiten können, bleibt die Position der Dichtelemente, und zwar sowohl der Dichtkappen 16 als auch der Dichtstege 17, von der Bewegung der Kugelschalen 12 und 21 weitgehend unbeeinflusst.

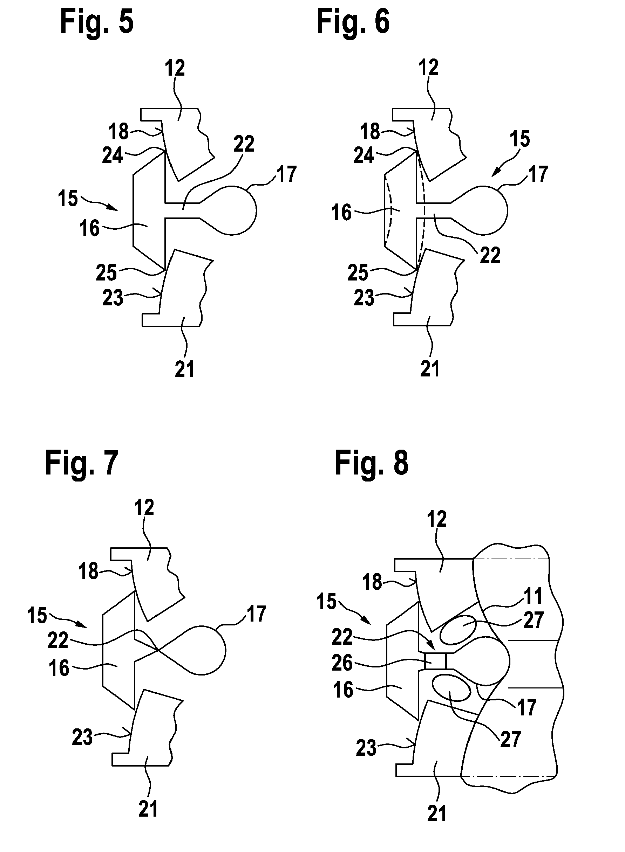

In den Fig. 5 und 6 ist das Dichtelement 15 bezogen auf die beiden Kugelschalen 12 und 21 in vergrößerter Darstellung gezeigt, wobei Fig. 5 den unverformten Zustand des Dichtelementes 15 und Fig. 6 einen geringfügig verformten, vorgespannten Zustand darstellt. Die Dichtkanten 24 und 25 an der Dichtkappe 16 des Dichtelementes 15 liegen gleitend an den Auflageflächen 18 und 23 der Kugelschalen 12 bzw. 21 an. Im vorgespannten Zustand gemäß Fig. 6 ist das Dichtelement 15 bezogen auf die Kugelschalen 12 und 21 geringfügig radial nach innen, also in Richtung der Lagerachse verspannt, so dass die Dichtkanten 24 und 25 an der Dichtkappe 16 mit Druck an den Auflageflächen 18 bzw. 23 anliegen.

Das Ausführungsbeispiel gemäß Fig. 7 unterscheidet sich von demjenigen nach Fig. 5 durch einen stark eingeschnürten, verjüngten Querschnitt 22 zwischen der Dichtkappe 16 und dem Dichtsteg 17. Dadurch wird eine weitestgehende Entkopplung bei einer Relativbewegung zwischen Dichtkappe 16 und Dichtsteg 17 erzielt.

Im Ausführungsbeispiel nach Fig. 8 ist das Dichtelement 15 im Wesentlichen gleich aufgebaut wie im Ausführungsbeispiel nach Fig. 5, jedoch mit dem Unterschied, dass in den verjüngten Querschnitt 22 eine Ausnehmung 26 eingebracht ist, wodurch eine Strömungsverbindung zwischen den vom Dichtsteg 17 separierten Bereichen geschaffen wird, die von der Außenkontur des Kugelzapfens 11 sowie den zugewandten Seitenwandungen der Kugelschalen 12 und 21 begrenzt sind. Über die Ausnehmung 26 ist ein Strömungsausgleich von Schmiermittel möglich, beispielsweise Fetttröpfchen 27, die sich in den eingeschlossenen Räumen diesseits und jenseits des Dichtstegs 17 befinden und zur Schmierung der Gelenkteile dienen.

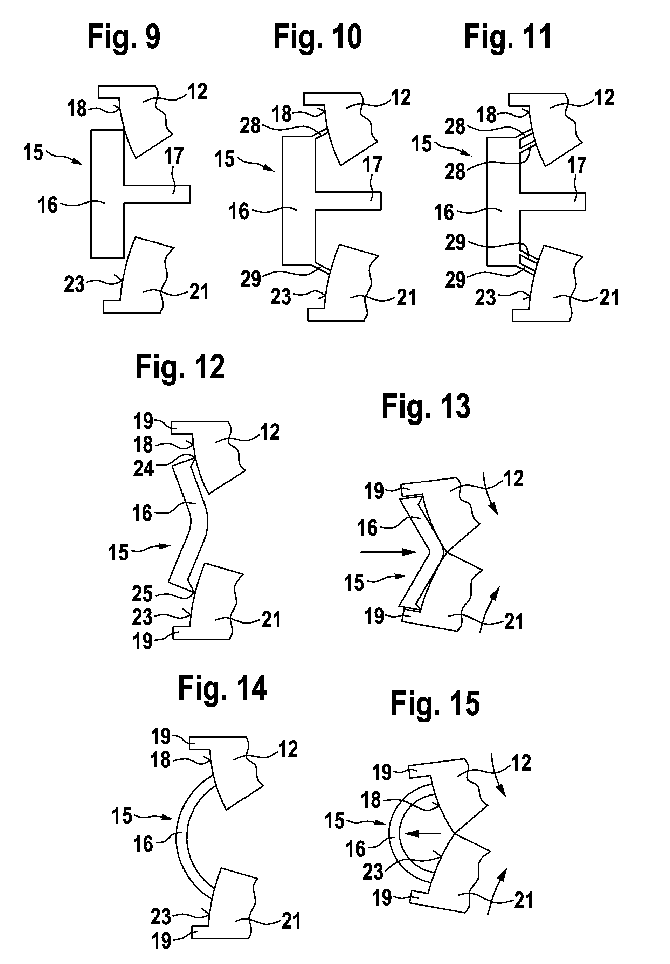

Im Ausführungsbeispiel nach Fig. 9 ist sowohl die Dichtkappe 16 als auch der Dichtsteg 17 jeweils mit einem rechteckförmigen Querschnitt versehen. Das Dichtelement 15 ist symmetrisch zu einer quer zur Lagerachse verlaufenden Ebene symmetrisch aufgebaut.

In den Fig. 10 und 11 weist das Dichtelement 15 grundsätzlich den gleichen Aufbau wie im Ausführungsbeispiel nach Fig. 9 auf, jedoch mit dem Unterschied, dass gemäß Fig. 10 im gegenüberliegenden Kantenbereich der Dichtkappe 16 jeweils eine Dichtlippe 28 bzw. 29 übersteht, deren freie Stirnseite in Kontakt mit der Auflagefläche 18 der Kugelschale 12 bzw. der Auflagefläche 23 der Kugelschale 21 liegt. Im Ausführungsbeispiel nach Fig. 11 sind jeweils zwei Dichtlippen 28 und 29 an der Dichtkappe vorgesehen, die jeweils auf der Auflagefläche 18 bzw. 23 aufliegen.

Das Ausführungsbeispiel gemäß den Fig. 12 und 13 zeigt ein weiteres Dichtelement 15, das gemäß Fig. 12 im unverformten und gemäß Fig. 13 im verformten Zustand dargestellt ist. Das Dichtelement 15 besteht lediglich aus der ringförmig umlaufenden Dichtkappe 16, die im Bereich gegenüberliegender Stirnseiten mit hervorspringenden Dichtkanten 24 und 25 versehen ist, mit denen die Dichtkappe 16 gleitend an den Auflageflächen 18 und 23 der Kugelschalen 12 bzw. 21 anliegt. Die Dichtkappe 16 besteht aus zwei zueinander winklig angeordneten Schenkeln, wobei im Falle einer Relativbewegung der beiden Kugelschalen 12 und 21 zueinander (Fig. 13) die Dichtkappe 16 in der Weise verformt wird, dass die beiden Schenkel der Dichtkappe zueinander einen geänderten Winkel einschließen.

Wie Fig. 12 und 13 weiter zu entnehmen, sind die Kugelschalen 12 und 21 jeweils mit begrenzenden Vorsprüngen 19 ausgestattet, die die Gleitbewegung der Dichtkanten 24 und 25 der Dichtkappe 16 beschränken. An den Vorsprüngen liegt in verformtem Zustand gemäß Fig. 13 jeweils die Stirnseite der Dichtkappe 16 an.

Die Dichtkappe 16 wird bei der Relativbewegung der Kugelschalen 12 und 21 in der Weise verstellt, dass die beiden Schenkel der Dichtkappe einen kleiner werdenden Winkel zueinander einnehmen. Der Knick zwischen den beiden Schenkeln der Dichtkappe befindet sich auf der radial innen liegenden, dem Kugelzapfen zugewandten Seite.

Im Ausführungsbeispiel gemäß den Fig. 14 und 15 ist das Dichtelement 15 ebenso wie vorangegangenem Ausführungsbeispiel ohne Dichtsteg und nur mit einer Dichtkappe 16 ausgebildet. Die Dichtkappe 16 weist im unbelasteten Zustand gemäß Fig. 14 eine gebogene, insbesondere eine teilkreisförmige Querschnittsform auf. Bei einer Relativbewegung der beiden Kugelschalen 12 und 21 zueinander wird die Dichtkappe 16 stärker nach außen gewölbt, zugleich gleiten die Stirnseiten der Dichtkappe, die auf den Auflageflächen 18 bzw. 23 aufliegen, bis zum Erreichen der als Anschlag fungierenden Vorsprünge 19 an den Auflageflächen entlang.

## Patentansprüche

1. Gelenkverbindungsanordnung in einer Scheibenwischvorrichtung
(1) für ein Fahrzeug, mit einem an einem Übertragungsglied (3, 10) angeordneten Kugelzapfen (11) und einer den Kugelzapfen (11) zumindest teilweise übergreifenden Kugelschale (12, 21), und mit einem an der Kugelschale (12, 21) anliegenden Dichtelement (15),
**dadurch gekennzeichnet, dass** die Kugelschale (12, 21) eine gewölbte Auflagefläche (18, 23) aufweist, an der eine Dichtkappe (16) des ringförmigen Dichtelements (15) aufliegt, derart, dass bei einer Relativdrehbewegung zwischen der Kugelschale (12, 21) und des Dichtelements (15) die Dichtkappe (16) auf der Auflagefläche (18, 23) entlanggleitet.

2. Gelenkverbindungsanordnung nach Anspruch 1,
**dadurch gekennzeichnet, dass** das Dichtelement (15) einen Dichtsteg (17) aufweist, der mit der Dichtkappe (16) verbunden ist und in Kontakt mit dem Kugelzapfen (11) steht.

3. Gelenkverbindungsanordnung nach Anspruch 2,
**dadurch gekennzeichnet, dass** die Dichtkappe (16) und der Dichtsteg (17) in zueinander winklig ausgerichteten Ebenen liegen.

4. Gelenkverbindungsanordnung nach Anspruch 2 oder 3,
**dadurch gekennzeichnet, dass** der Dichtsteg (17) über einen Abschnitt (22) mit verjüngtem Querschnitt mit der Dichtkappe (16) verbunden ist.

5. Gelenkverbindungsanordnung nach einem der Ansprüche 2 bis 4,
**dadurch gekennzeichnet, dass** der Dichtsteg (17) eine abgerundete Querschnittsform aufweist.

6. Gelenkverbindungsanordnung nach einem der Ansprüche 2 bis 4,
**dadurch gekennzeichnet, dass** der Dichtsteg (17) eine rechteckige Querschnittsform aufweist.

7. Gelenkverbindungsanordnung nach einem der Ansprüche 2 bis 6,
**dadurch gekennzeichnet, dass** der Dichtsteg (17) und die Dichtkappe (16) gemeinsam ein T-Profil bilden.

8. Gelenkverbindungsanordnung nach Anspruch 7,
**dadurch gekennzeichnet, dass** die Dichtkappe (16) und der Dichtsteg (17) zwischen zwei Kugelschalen (12, 21) angeordnet sind.

9. Gelenkverbindungsanordnung nach einem der Ansprüche 2 bis 6,
**dadurch gekennzeichnet, dass** der Dichtsteg (17) und die Dichtkappe (16) gemeinsam ein L-Profil bilden.

10. Gelenkverbindungsanordnung nach Anspruch 9,
**dadurch gekennzeichnet, dass** die Dichtkappe (16) und der Dichtsteg (17) zwischen einer Kugelschale (12, 21) und dem Übertragungsglied (3, 10) angeordnet sind.

11. Gelenkverbindungsanordnung nach einem der Ansprüche 1 bis 10,
**dadurch gekennzeichnet, dass** die Dichtkappe (16) eine Dichtkante (24, 25) aufweist, die auf der Auflagefläche (18) der Kugelschale (12, 21) aufliegt.

12. Gelenkverbindungsanordnung nach einem der Ansprüche 1 bis 11,
**dadurch gekennzeichnet, dass** die Dichtkappe (16) einen trapezförmigen Querschnitt aufweist.

13. Scheibenwischvorrichtung in einem Fahrzeug mit einer Gelenkverbindungsanordnung (1) nach einem der Ansprüche 1 bis 12.
